# EUROPÄISCHE PATENTSCHRIFT

(11) **EP 1 644 189 B1**
(45) Veröffentlichungstag und Bekanntmachung des Hinweises auf die Patenterteilung: **02.06.2010**
(21) Anmeldenummer: 04763267.4
(22) Anmeldetag: 15.07.2004
(51) Int. Cl.: B32B 37/24, B32B 37/10, B32B 15/08

(54) **VERFAHREN ZUR HERSTELLUNG EINES LAMINATS, VORRICHTUNG ZUM DURCHFUEHREN DES VERFAHRENS UND ERHALTENES LAMINAT**
METHOD FOR THE PRODUCTION OF A LAMINATE, DEVICE FOR CARRYING OUT THE METHOD AND CORRESPONDING LAMINATE
PROCEDE DE FABRICATION D'UN LAMINE, DISPOSITIF POUR LA MISE EN OEUVRE DUDIT PROCEDE ET LAMINE OBTENU

(30) Priorität: 15.07.2003 DE 10332052
(43) Veröffentlichungstag der Anmeldung: 12.04.2006
(73) Patentinhaber: Heinrich Strunz GmbH, 95111 Rehau (DE)
(72) Erfinder: BACHSTEIN, Stefan, 95032 Hof Saale (DE)
(74) Vertreter: Müller-Boré & Partner Patentanwälte
(86) Internationale Anmeldenummer: PCT/EP2004/007918
(87) Internationale Veröffentlichungsnummer: WO 2005/005145

(56) Entgegenhaltungen:
- EP-A- 1 044 796
- DE-A- 3 413 053
- DE-A- 4 317 315
- DE-A- 10 144 287
- GB-A- 1 201 044
- GB-A- 2 245 524
- US-A- 5 089 076

## Beschreibung

Die vorliegende Erfindung betrifft ein Verfahren zur Herstellung eines Laminats, sowie eine Vorrichtung zum Durchführen des Verfahrens und ein entsprechend erhaltenes Laminat, welches insbesondere ein GFK-Aluminiumlaminat sein kann, anwendbar z.B. im Fahrzeugbau zur Darstellung von LKW-Aufbauten und der gleichen oder Caravan/Wohnmobil-Seitenwänden

Bei dieser oben genannten spezifischen Anwendung werden heutzutage häufig GFK-Platten eingesetzt die teilweise als sogenannte Sandwich-Strukturelemente ausgebildet sind. Bei solchen Elementen kann jedoch eine Oberflächenverwitterung oder -vergilbung auftreten und vereinzelt sind die Oberflächeneigenschaften für spezifische Anwendungen ungenügend.

Die Anmelderin hat bereits ein Laminat und ein Verfahren Vorgeschlagen (DE-A-195 10 237), um im wesentlichen Polymere Schichtpressstoffe mit GFK zu verstärken. Durch das bekannte Verfahren kann ein separates Aufkleben von entsprechenden Dekorfolien vermieden werden, indem man eine sogenannte Gelcoatschicht durch ein vorgefertigtes Polymermaterial ersetzt. Somit wird bei dem bekannten Verfahren und Laminat zwar ein aufwendiger Arbeitsschritt vermieden, ein struktureller Vorteil resultiert jedoch nicht.

Alternativ werden bis dato auch Aluminium-Platten für diese Anwendung benutzt, problematisch sind jedoch die bei mechanischer Belastung ungünstigen Materialeigenschaften sowie die bleibenden plastischen Verformungen, z.B. bei Hagelschlag, wobei jedoch im Gegensatz zu den vorgenannten GFK-Produkten die Oberflächeneigenschaften wie z.B. die Lackierfähigkeit besser sind.

Demgemäß wurden in den letzten Jahren vermehrt Versuche unternommen von beiden Materialeigenschaften nutzen zu ziehen.

So schlägt z.B. die DE-A-19918736 ein Verbundmaterial vor, bei dem eine Metalldeckschicht auf ein darunterliegendes Material aufgeklebt wird. Verbundmaterialien, bei denen man eine Metallbahn mit einer vorgefertigten Kunststoffplatte verkleben muß sind verfahrenstechnisch unökonomisch und erfordern beim Verkleben eine hohe Sorgfalt. Solche verklebten Verbundmaterialien erlauben in der Regel auch lediglich eine geringe Verformung und das Ergebnis des Verbundmaterials erfüllt häufig nicht die gewünschten Anforderungen, da die Metallschicht leicht beim Verkleben zerkratzt oder verformt wird, während auch der Kunststoffbestandteil und/oder der Metallbestandteil durch das Verkleben selbst verunreinigt wird.

Aus der DE-A-19646438 ist ein Verfahren zur Herstellung von flächigen GFK-Formplatten bekannt, in welcher Formteile dann z.B. wie weiter oben erwähnt mit einer Metallbahn verklebt werden können.

Aus einem anderen technischen Gebiet, nämlich der Skiproduktion sind des weiteren Kunststoff/Metall Schichtstrukturen bekannt, siehe z.B. DE-A-3913969 und DE-A-3636645. Bei der Skiherstellung wird üblicherweise in eine Gießwanne ein Metallstrukturelement eingelegt, welches dann vollständig mit Harz umgossen wird. Hierbei wird also demgemäß lediglich ein Teil der Vorteile von Metall genutzt, insbesondere kann mit solch einem Verfahren nicht Vorteil gezogen werden von den Oberflächeneigenschaften wie der Lackierbarkeit und ähnlichem.

Die EP 1 044 796 offenbart ein mehrschichtiges Verbundelement aus zumindest drei Schichten, mit einer inneren Schicht aus thermoplastischem Polymermaterial, an welche eine Schicht mit geringer Dichte, wie beispielsweise Schaumstoff angrenzt, und einer Tragschicht, beispielsweise aus Blech oder einer Aluminiumlegierung.

Die DE 34 13 053 offenbart eine Vorrichtung zum Einschweißen von flächigen Gegenständen zwischen Kunststofffolien mit einer beheizbaren Presseinrichtung, welche separierbare, heizbare Platten aufweist, zwischen welchen die unter Druck und Temperatur zu verschweißendne Folien mit dazwischen liegenden Gegenständen anordbar sind, wobei die heizbaren Platten als ringförmig geschlossenen Transportbänder ausgebildet sind.

Es besteht demgemäß Bedarf an Laminaten, einem effektivem Verfahren zur Herstellung eines Laminats sowie an einer entsprechenden Vorrichtung zur Herstellung von Laminaten, derart, daß verbesserte Struktur und Oberflächeneigenschaften bereitgestellt sind. Es ist daher Aufgabe der vorliegenden Erfindung solch ein Laminat, ein Verfahren und solch eine Vorrichtung anzugeben, die zum Durchführen des Verfahrens geeignet ist.

Das Verfahren sollte neben hoher Effizienz die Möglichkeit bereitstellen, Laminate herzustellen unter Einsatz von im wesentlichen nicht-polymerem Halbzeug, insbesondere mit geeigneten strukturellen Eigenschaften und Oberflächeneigenschaften, wie z. B. ein oberflächenbehandeltes Metall, die überausgezeichnete Stabilitäts- und Oberflächeneigenschaften verfügen. In der Tat hat sich nämlich in äußerst überraschender weise herausgestellt, daß ein Synergie-Effekt auftritt, wenn man ein im wesentlichen nicht-polymeres Halbzeug beim Herstellen des Laminates mit Einlaufen lässt. Neben den optimierten Oberflächeneigenschaften werden auch die strukturellen Eigenschaften des Laminates deutlich verbessert, was eigentlich nicht zu erwarten war, da der Fachmann davon ausgehen mußte, daß lediglich polymere Halbzeuge, wie z.B. die von der Anmelderin vorgeschlagenen Schichtpressstoffe eine ausreichend innige Verbindung mit dem das Laminat ausbildenden Kunststoff bereitstellen würden.

Das erfindungsgemäße Verfahren zur Herstellung eines Laminats umfaßt die Schritte: Bereitstellen von zumindest einer kontinuierlichen Prozeßfolie; Aufbringen einer kontinuierlichen, im wesentlichen nicht-polymeren Halbzeugbahn auf die Prozeßfolie; Abdichten der Halbzeugbahn bezüglich der Prozessfolie mittels eines Klebebandes, eines doppelseitigen Klebebandes oder mittels fluidem Klebstoffes; Aufbringen eines härtbaren Kunststoffes auf die Halbzeugbahn; und Härten des Kunststoffes unter Bereitstellung einer Bondierung zwischen dem Kunststoff und dem Halbzeug. Ein wesentliches Merkmal des erfindungsgemäßen Verfahrens ist, daß es sich um ein kontinuierliches Verfahren handelt, mit kontinuierlicher Zufuhr der verschiedenen Materialien und Bestandteile, so daß ein Laminat mit praktisch unbeschränkten Abmessungsmöglichkeiten bereitgestellt werden kann. Ein weiteres wesentliches Merkmal des erfindungsgemäßen Verfahrens besteht darin, daß die Bondierung zwischen dem Halbzeug und dem Kunststoff durch das Aushärten selbst erzielt wird, so daß der bisher übliche separate Schritt des Verklebens entfallen kann, wodurch auch die Probleme die beim Verkleben sonst auftreten konnten, vermieden werden. Die Verwendung von Prozeßfolie hat den Vorteil, daß die gesamte Kunststoffmasse und das Halbzeug auf der Prozeßfolie geführt werden kann, so daß eine Verunreinigung der Werkzeuge vermieden werden kann, was insbesondere bei dem hier vorgeschlagenem kontinuierlichen Verfahren die Produktivität erhöht, da einerseits das Verfahren zu Reinigungszwecken nicht unterbrochen werden muß und andererseits Verunreinigungen nicht zu einer Beeinträchtigung des hergestellten Produktes führen können. Unter im wesentlichen nicht-polymeres Halbzeug ist vorliegend insbesondere ein strukturelles Zwischenprodukt zu verstehen, welches z.B. oberflächenbehandelt ist. Mittels der Abdichtung der Prozessfolie bezüglich des Halbzeugs, insbesondere einer Metallbahn kann eine Verunreinigung durch den Kunststoff selbst, z. B. auch Harz an der von der Prozeßfolie abgedeckten Seite nicht auftreten, so daß es z. B. auch möglich ist, eine oberflächenbehandelte Metallbahn vorzusehen, die im Hinblick auf ihre spätere Verwendung z. B. eloxiert sein könnte oder auch eine Lackierung aufweisen könnte. Der Schritt des Abdichtens kann beispielsweise mittels eines Klebebandes erfolgen, welches kontinuierlich am Randbereich der Halbzeugbahn eingebracht und bevorzugt angepresst wird. Alternativ ist auch eine Verklebung zwischen der Halbzeugbahn und der Prozessfolie mittels fluiden Klebstoffes oder mittels eines doppelseitigen Klebebandes möglich.

Durch dieses Abdichten mittels Verklebung wird darüber hinaus in vorteilhafter Weise sichergestellt, dass etwaige seitliche Randwellen der Halbzeugbahn niedergedrückt bzw. geglättet werden. Daraus resultiert eine effektivere Materialausnutzung insbesondere in den Randbereichen.

Bei einer bevorzugten Ausführungsform umfaßt das Verfahren den Schritt des Aufbringens einer zweiten kontinuierlichen Prozessfolie auf den härtbaren Kunststoff. Durch das Bereitstellen von zwei Prozessfolien ist es möglich das Laminat während des gesamten Verfahrens vor Verunreinigungen zu schützen, da es sandwichartig zwischen den Prozessfolien eingefasst ist.

Vorteilhafterweise umfaßt das Verfahren ferner den Schritt des Einbringens von Verstärkungsmaterial in den härtbaren Kunststoff. Dieser Schritt kann mit dem Aufbringen des härtbaren Kuststoffes kombiniert sein, indem man beispielsweise eine entsprechende Giessmasse oder ein Faserspritzverfahren verwendet oder separat erfolgen. Das Verstärkungsmaterial, welches z.B. in der Form von Glasfasermatten, oder anders geartetem Verstärkungsmaterial vorliegen kann, ist bevorzugt, um die Struktureigenschaften des härtbaren Kunststoffes und somit des gesamten Laminats zu erhöhen. Obwohl auch rieselfähige Verstärkungsmaterialen zum Einsatz kommen können, die auch kontinuierlich zugeführt werden können, ist es aus regelungstechnischer Sicht für das Verfahren am einfachsten auch ein bahnförmiges Verstärkungsmaterial zu verwenden, wie z.B. Glasfasermatten oder - gewebe, welches rollenweise am Markt verfügbar ist, jedoch im Sinne der Erfindung nicht als Halbzeug bezeichnet wird. Es sind beliebige Faserarten und -strukturen einsetzbar. Lediglich beispielhaft können Glas, Kohlenstoff, Aramid, Naturfasern etc. als Fasern und Gewebe, Häckselmatten, Endlosmatten, Vlies und Roving als Faserstrukturen genannt werden.

Bei einer bevorzugten Ausführungsform des erfindungsgemäßen Verfahrens ist ferner ein Schritt des Kalandrierens vorgesehen, wobei insbesondere ein Kalander unmittelbar vor der Aushärtezone angeordnet wird, so daß der Schritt des Kalandrierens unmittelbar vor dem Aushärten stattfindet. Das Kalandrieren ermöglicht einerseits eine hohe Planparallelität sowie andererseits eine effektive Durchtränkung und/oder Entlüftung. Bei einer insbesondere bevorzugten Ausführungsform bildet eine der Kalanderwalzen eine Umlenkeinrichtung für eine der Prozeßfolien aus.

Um Lufteinschlüsse vermeiden zu können und/oder um eine enganliegende Schutzprozeßfolie für das Halbzeug, insbesondere das Metallband bereitzustellen, ist es bevorzugt, daß bei dem erfindungsgemäßen Verfahren der Raum zwischen den Prozeßfolien und/oder einer Prozeßfolie und dem Halbzeug evakuiert ist, wobei unter dem Begriff evakuiert ein beliebig wählbarer Unterdruck zu verstehen ist.

Bei dem erfindungsgemäßen Verfahren ist es bevorzugt, daß zumindest eine Prozeßfolie seitlich über die Halbzeugbahn ragt, um einen Eingriff durch Transportmittel zu ermöglichen. In dem man zumindest eine der Prozeßfolien seitlich über die Halbzeugbahn vorstehen läßt, ist es möglich, zu jedem Zeitpunkt des Verfahrens eine Vorwärtsbewegung des kontinuierlich hergestellten Laminates zu gewährleisten, ohne daß ein Eingriff an der Kunststoff- oder der Halbzeugoberfläche erforderlich wäre, so daß eine zusätzliche Schutzfunktion bereitgestellt werden kann, zur Aufrechterhaltung der Integrität der jeweiligen Oberflächen. Anders ausgedrückt kann bei dieser Ausführungsform das Laminat außerhalb der verwendbaren Fläche somit transporttechnisch geführt werden.

Bei einer weiteren bevorzugten Ausführungsform des erfindungsgemäßen Verfahrens sind bei Verwendung von zwei Prozessfolien diese seitlich neben dem Halbzeug miteinander in Eingriff bringbar, insbesondere im wesentlichen dichtend miteinander in Eingriff bringbar, so daß die Prozeßfolien eine Art flachen Schlauch ausbilden können, in dem das Laminat aufgebaut, gegebenenfalls kalandriert und gehärtet wird, wobei eine Abdichtung seitlich verhindert, daß das Kunststoffmaterial, z.B. Harz vor dem Aushärten seitlich austritt, wodurch eine noch bessere Schutzfunktion gegen eine Verunreinigung der Anlage selbst bereitgestellt ist.

Vorzugsweise handelt es sich bei der Halbzeugbahn um eine Halbzeugbahn die bezüglich des härtbaren Kunststoffes im wesentlichen undurchtränkbar ist, um praktisch unabhängig von den jeweiligen Struktureigenschaften Profit ziehen zu können.

Bei dem erfindungsgemäßen Verfahren kann insbesondere eine oberflächenbehandelte oder beschichtete Metallbahn zum Einsatz kommen, wobei die Beschichtung einerseits eine verbesserte Bondierung bezüglich des Kunststoffes bereitstellen kann, z.B. in der Form eines Primers oder dergleichen und/oder auch eine Beschichtung, die bei der späteren Verwendung die sichtbare Oberfläche darstellt.

Zusammenfassend läßt sich feststellen, daß mit dem erfindungsgemäßen Verfahren in besonders einfacher und effektiver Weise kontinuierliche Laminate unter Einbringung von im wesentlichen nicht-polymerem Halbzeug hergestellt werden können, wobei das Laminatpaket auf einer, insbesondere zwischen zwei kontinuierlich laufenden Prozeßfolien geführt wird, von denen eine bevorzugt die Halbzeugoberfläche, die später die Oberfläche des Laminats ist, vor Kunststoff, Harz und der gleichen schützt, während die andere Prozeßfolie die Oberflächeneigenschaften der anderen Seite des Laminats vorteilhaft schützt und beeinflußt. Der Fachmann wird erkennen, daß verschiedenste Prozeßparameter und Materialien zum Einsatz kommen können, lediglich beispielhaft sei angeführt, daß für das Kunststoffmaterial ungesättigtes Polyesterharz , Vinylesterharz, Epoxyharz verwendet wird, während das Halbzeug vorzugsweise aus Aluminium oder dessen Legierungen, aus Stahl oder aus verzinktem Stahl gebildet ist. Die Prozeßfolien selbst können z.B. Polyesterfolien sein, so daß z.B. eine lichtinduzierte Aushärtung angedacht werden kann, wenn die Prozeßfolien durchsichtig vorgesehen werden. Obwohl nicht explizit angeführt wird der Fachmann auch verstehen, daß zusätzlich selbstverständlich entsprechende Entlüftungsadditive und Beschleuniger neben Harz und Härter zum Einsatz kommen. Wie angegeben zeichnet sich das erfindungsgemäße Verfahren durch eine hohe Produktivität aus, die z.B. bereitgestellt werden kann durch eine Transportgeschwindigkeit von etwa 2-6 m/min.

Die Erfindung hat neben dem erfindungsgemäßen Verfahren auch eine Vorrichtung zum Durchführen des Verfahrens zum Gegenstand. Solch eine Vorrichtung zum Durchführen des Verfahrens umfaßt einen Materialspeicher zum kontinuierlichen Ausgeben von zumindest einer Prozeßfolie, eine Speicherausgabeeinrichtung zum kontinuierlichen Bereitstellen eines im wesentlichen nicht-polymerem Halbzeugs, insbesondere einer Halbzeugbahn, eine Abdichteinrichtung, zum Abdichten des Halbzeuges bezüglich der Prozessfolie mittels eines Klebebandes, eines doppelseitigen Klebebandes oder mittels fluidem Klebstoffes, sowie eine Einrichtung zum Speichern und Ausgeben in kontinuierlicher Weise von härtbarem Kunststoff. Insbesondere bevorzugt werden die unterschiedlichen Prozeßfolie(n) und Bestandteile des zu bildenden Laminates in gewickelter Form vorgesehen, wobei auch das Produkt, d.h. das ausgehärtete Laminat als Wickelware, auch Coil genannt, ausgegeben werden kann.

Optional enthält wie angegeben die Vorrichtung auch einen zweiten Materialspeicher für die zweite Prozessfolie.

Bei einer bevorzugten Ausführungsform umfaßt die Abdichteinrichtung, zum Abdichten des Halbzeuges bezüglich der oder einer der Prozessfolie(n) eine Klebestreifenausgabeeinrichtung mit optionalen Beaufschlagungsmitteln und einer optionalen Gegendruckeinheit. Somit kann ein Hinterlaufen der Oberfläche des Halbzeugs effektiv vermieden werden. Es ist zu erwähnen, dass auch andere Abdichtungen möglich sind, wie insbesondere ein fluider Klebstoff oder ein doppelseitiges Klebeband, welches als Zwischenschicht zwischen der Halbzeugbahn und der Prozessfolie vorzusehen ist.

Die Vorrichtung umfaßt vorteilhafterweise eine Kunststoffverteil- und/oder Beaufschlagungseinrichtung, insbesondere in der Form eines Rakels und/oder eines Kalanders. Durch solch eine Ausgestaltung kann eine homogene Schichtdicke des ungehärteten Kunststoffes gewährleistet werden, wobei ein Kalander insbesondere beim Einsatz von zusätzlichem Verstärkungsmaterial bevorzugt ist, da somit eine geeignete Durchtränkung besser gewährleistet werden kann.

Um in den härtbaren Kunststoff ein Verstärkungsmaterial ebenfalls in kontinuierlicher Weise eindringen zu können ist es bevorzugt, dass die Vorrichtung ferner eine Einrichtung zum Speichern und kontinuierlichen Ausgeben von Verstärkungsmaterial umfaßt. Das Verstärkungsmaterial kann z.B. in der Form von gewebten Glasfasermatten rollenweise vorgesehen sein, so daß die kontinuierliche Zufuhr besonders einfach dargestellt werden kann, wobei jedoch zu erwähnen ist, daß auch riesel-oder schüttfähige Verstärkungsmaterialien zum Einsatz kommen könnten.

Um das Härten des härtbaren Kunststoffes initiieren oder beschleunigen zu können, ist es bevorzugt, daß die erfindungsgemäße Vorrichtung ferner eine Heizeinrichtung umfaßt, insbesondere einen kontinuierlich beschickbaren Heiz- und Temperiertisch. Beispielhaft kann solch ein Heiz- und Temperiertisch sich unmittelbar an ein Kalanderwalzwerk anschließen, so daß es möglich ist, im wesentlichen die Konfiguration wie sie nach dem Kalander vorliegt im Endprodukt aufrecht zu erhalten.

Um einen kontinuierlichen Transport des Laminates und der Laminatbestandteile ermöglichen zu können, ist vorteilhafterweise ein Fördermittel vorgesehen, welches seitlich der Halbzeugbahn, z. B. aus Metall mit zumindest einer der Prozeßfolien in Eingriff bringbar ist. Durch das seitliche neben dem Halbzeug angeordnete Fördermittel ist ein effektiver Transport durch die Vorrichtung hindurch möglich, ohne daß ein unmittelbarer Eingriff an einer der Flächen des Endproduktes erforderlich wäre.

Schließlich ist es bevorzugt, daß bei solch einer Vorrichtung die Fördermittel derart ausgebildet sind, daß ein dichtender Eingriff zwischen zwei Prozeßfolien ermöglicht ist, wodurch zumindest abschnittsweise ein seitliches Heraustreten des noch nicht gehärteten Kunststoffmaterials verhindert werden kann.

In einer besonderen Ausführungsform der vorliegenden Erfindung umfasst das Verfahren zur Herstellung des Laminats die Schritte: Bereitstellen einer Auflagefläche 370 mit vorbestimmten Abmessungen; Bereitstellen von zumindest einer optionalen ersten Prozessfolie 311; Aufbringen einer im wesentlichen nicht-polymeren Halbzeugbahn 331 auf die Auflagefläche oder die optionale erste Prozessfolie 311; Abdichten der Halbzeugbahn 331 bezüglich der Auflagefläche oder der optionalen ersten Prozessfolie 311 mittels eines Klebebandes, eines doppelseitigen Klebebandes oder mittels fluidem Klebstoffes; Aufbringen eines härtbaren Kunststoffes 341 auf die Halbzeugbahn 331; und Härten des Kunststoffes unter Bereitstellung einer Bondierung zwischen dem Kunststoff und dem Halbzeug. '

Ein wesentliches Merkmal dieser Ausführungsform des erfindungsgemäßen Verfahrens ist, dass insbesondere für den Schritt des Aufbringens des härtbaren Kunststoffs 341 auf die Halbzeugbahn 331 eine Relativbewegung erzeugt wird zwischen der Auflagefläche 370 und einer Laminiereinheit, mittels welcher der Kunststoff 341 aufgebracht wird. Da bei dieser speziellen Ausführungsform das Halbzeug auf der Auflagefläche ruht, kann prinzipiell auf die Zwischenschaltung einer ersten Prozessfolie verzichtet werden. In diesem Fall erfolgt das Abdichten der Halbzeugbahn bezüglich der Auflagefläche. Aus Gründen der oben genannten Reinigungsaspekte kann es jedoch auch vorteilhaft sein, eine erste Prozessfolie 311 zwischen die Auflagefläche und die Halbzeugbahn zwischenzuschalten, so dass das Abdichten der Halbzeugbahn in diesem Fall bezüglich der ersten Prozessfolie erfolgt. Im Weiteren entsprechen die Vorteile dieser besonderen Ausführungsform den oben geschilderten. Insbesondere wird durch das Abdichten des Halbzeugs bezüglich der Auflagefläche bzw. der Prozessfolie sichergestellt, dass kein Material unter das Halbzeug unterlaufen kann und dass eine etwaige Randwelligkeit des Halbzeugs geglättet und ausgeglichen wird. Beides steigert insbesondere die Materialausbeute an resultierendem Laminat.

Die Erfindung hat ferner eine besondere Ausführungsform einer Vorrichtung zur Durchführung des Verfahrens zum Gegenstand, umfassend eine Auflagefläche 370 mit vorbestimmten Abmessungen, einem optionalen Materialspeicher 310 zum Ausgeben von zumindest einer optionalen ersten Prozessfolie 311, eine Speicherausgabeeinrichtung 330 zum Bereitstellen einer im wesentlichen nicht polymeren Halbzeugbahn 331, eine Abdichteinrichtung zum Abdichten des Halbzeugs bezüglich der Auflagefläche oder der optionalen Prozessfolie mittels eines Klebebandes, eines doppelseitigen Klebebandes oder mittels fluidem Klebstoffes, sowie zumintest eine relativ zur Auflagefläche 370 bewegliche Laminiereinrichtung 340 zum Speichern und Ausgeben von härtbaren Kunststoff 341. Die Speicherung und Ausgabe des härtbaren Kunststoff 341 mittels der Laminiereinrichtung erfolgt durch Lateralbewegung entweder der Auflagefläche 370 und/oder der Laminiereinrichtung 341 relativ zueinander. Durch eine derartige Ausgestaltung ist es möglich, dass die im wesentlichen nicht polymere Halbzeugbahn 331 auf der Auflagefläche ruht, so dass prinzipiell auf die Verwendung einer optionalen ersten Prozessfolie 311 verzichtet werden kann. In diesem Fall erfolgt das Abdichten des Halbzeugs bezüglich der Auflagefläche mittels der bereitgestellten Abdichteinrichtung. Optional kann vor dem Bereitstellen der Halbzeitbahn eine Prozessfolie 311 auf die Auflagefläche 370 aufgebracht werden, wobei die oben genannten Vorteile insbesondere bezüglich der entfallenden Reinigung der Vorrichtung in Erscheinung treten.

Im Weiteren entsprechen die Funktionsweisen und Vorteile der zusätzlichen Merkmale dieser besonderen Ausführungsform den oben genannten. Insbesondere wird durch die Abdichteinrichtung für das Abdichten des Halbzeugs bezüglich der Auflagefläche bzw. der Prozessfolie sichergestellt, dass kein Material unter das Halbzeug unterlaufen kann und dass eine etwaige Randwelligkeit des Halbzeugs geglättet und ausgeglichen wird. Beides steigert insbesondere die Materialausbeute an resultierendem Laminat.

Die mit dem erfindungsgemäßen Verfahren hergestellten Kunststoff-Metall-Laminate zeichnen sich durch eine gute Ebenmäßigkeit der Oberfläche an der/den mit einer Prozessfolie versehenen Seite aus, solche guten Oberflächenebenmäßigkeiten werden in äußerst überraschenderweise durch das erfindungsgemäße Verfahren bereit gestellt, insbesondere da das Kunststoffmaterial unmittelbar auf das Metall laminiert wird, wobei die Oberfläche während des Herstellungsverfahrens durch eine geeignet gewählte Prozeßfolie bestimmt wird. Die Kunststoff-Metall-Laminate, die mit dem erfindungsgemäßen Verfahren hergestellt sind, zeichnen sich ferner durch eine sehr hohe Bondierung zwischen Metall und Kunststoff aus, die insbesondere einer hohen Scherbeanspruchung und/oder einer Schlagbeanspruchung ohne Veränderung der Laminatstruktur widerstehen kann. Solch hohe Flächenbondierungen waren bis dato nicht verfügbar und lassen sich insbesondere nicht durch Verklebung separat hergestellter Einzelelemente darstellen. Die Laminate zeigen unter ballistischer Beaufschlagung mit Kugeln von 20mm Durchmesser bei einer Geschwindigkeit von 20 m/s keine Verformung.

Weitere Vorteile und Merkmale der vorliegenden Erfindung ergeben sich ferner aus der folgenden lediglich beispielhaft angegebenen Beschreibung einer derzeit bevorzugten Ausführungsform. In der nachfolgenden Beschreibung wird auf die beiliegenden Zeichnungen Bezug genommen, in welchen gelten:
Fig. 1 zeigt in schematischer Seitenansicht eine Vorrichtung zum Herstellen eines Kunststoff-Metall-Laminats als bevorzugte Ausführungsform der Erfindung und zum Zwecke der Illustration des erfindungsgemäßen Verfahrens.
Fig. 2 zeigt in schematischer Auf- und Seitenansicht eine Möglichkeit die Abdichtung zwischen Halbzeugbahn und Prozessfolie bereitzustellen.
Fig. 3 zeigt in schematischer Seitenansicht eine weitere Ausführungsform einer Vorrichtung zum Herstellen eines Kunststoff Metall-Laminats als bevorzugte Ausführungsform der Erfindung und zum Zwecke der Illustration des erfindungsgemäßen Verfahrens.

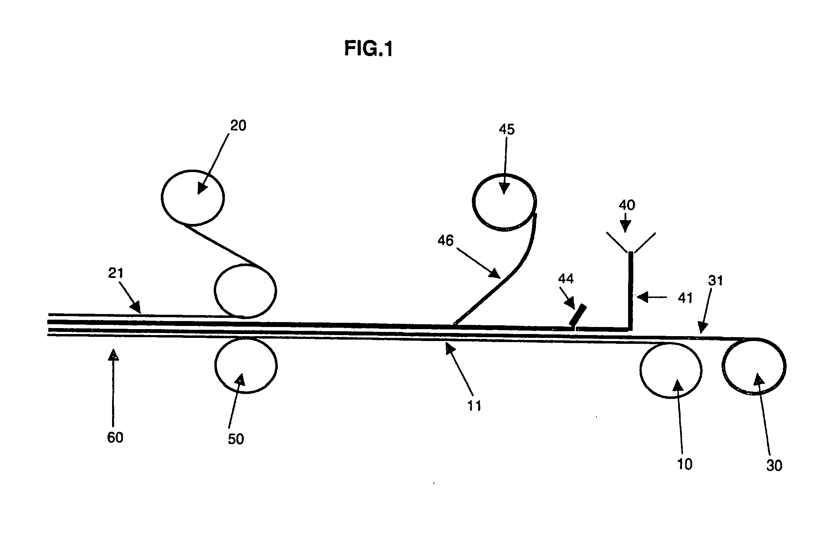

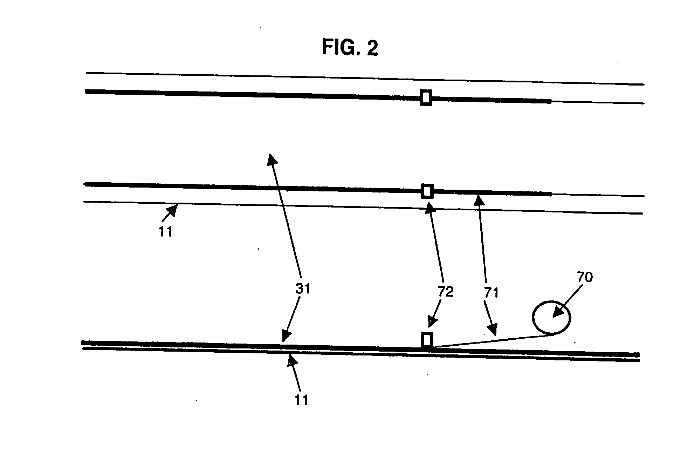

In Fig. 1 ist in schematischer Seitenansicht eine Vorrichtung dargestellt, die die Herstellung eines Kunststoff-Metall-Laminats ermöglicht. Die Vorrichtung umfaßt in der dargestellten Ausführungsform einen ersten Materialspeicher 10, der kontinuierlich eine Prozeßfolie 11 ausgeben kann, die in der gezeigten Ausführungsform als Trägerfolie dient. In der gezeigten Ausführungsform handelt es sich um eine 100µm Polyesterfolie, die wie dargestellt von einer Rolle abgewickelt werden kann. Ferner umfaßt die dargestellte Vorrichtung eine Speicherausgabeeinrichtung 30 zum kontinuierlichen Bereitstellen einer Metallbahn 31, die wie dargestellt derart zugeführt wird, daß sie unmittelbar oberhalb der Prozeß- oder Trägerfolie 11 zu liegen kommt. Es ist zu erwähnen, daß die Breite der Prozeßfolie 11 zumindest so hoch sein sollte, wie jene des Metallbandes 30, wobei wie es später erläutert wird, insbesondere bevorzugt ist, daß die Prozeßfolie 11 breiter ist als die Metallbahn 31. In dem Bereich, wo die Prozeßfolie 11 und die Metallbahn zusammengeführt werden ist eine in Fig. 2 dargestellte optionale Abdichteinrichtung vorgesehen, die an den seitlichen Rändern des Metallbandes 31 die Prozeßfolie 11 anhaftet, so daß eine flüssige oder fließfähige Substanz auf der Oberseite des Metallbandes weder an die Seitenflächen noch an die unten liegende Seite des Metallbandes gelangen kann.

Wie es in Fig. 2 dargestellt ist kann, obwohl eine Abdichtung ebenso mittels eines fluiden Klebstoffes oder mittels eines doppelseitigen Klebebandes zwischen Halbzeug und Prozessfolie möglich ist, in besonders bevorzugter Weise ein Klebeband 71 überlappend über den Rand des Halbzeuges 31 von einer Rolle 70 ausgegeben und mittels einer Andruckeinrichtung mit sowohl der Prozessfolie als auch dem Halbzeug verbunden werden.

Die in Fig. 1 dargestellte Vorrichtung umfaßt ferner eine Einrichtung 40 zum Speichern und Ausgeben in kontinuierlicher Weise von härtbarem Kunststoff 41. In der dargestellten Ausführungsform handelt es sich z.B. um ein ungesättigtes Polyesterharz, welches gegebenenfalls unmittelbar vor der Ausgabe mit einem entsprechenden Härter vermischt und entsprechend dosiert ausgegeben werden kann, so daß auf der Oberseite der Metallbahn 31 ein Harzsee gebildet wird. In der dargestellten Ausführungsform ist zum Verteilen des flüssigen Kunststoffes ein Rakel 44 vorgesehen, der ein erstes Glattstreifen ermöglicht und gewährleisten kann, daß die gesamte Oberfläche des Metallbandes mit Harz beschichtet wird.

Nachdem bei der Erfindung optional aber jedoch bevorzugt Verstärkungsmaterialien, wie z.B. Glasfasermatten zum Einsatz kommen können, ist in der dargestellten Ausführungsform ferner eine Einrichtung 45 vorgesehen, um Verstärkungsmaterial zu speichern und in kontinuierlicherweise auszugeben. Die Verstärkungsmaterialzufuhr erfolgt vorliegend derart, daß das Glasfasermatte 46 in die mittels des Rakels 44 verteilte Harzschicht einläuft. Nach der Zufügung vom Verstärkungsmaterial 46 wird schließlich eine zweite Prozeßfolie von einem zweiten Materialspeicher 20 zugeführt, bevor das gesamte so gebildete Paket aus unterer Prozeßfolie, Metallbahn 31, bezüglich der Prozeßfolie 11 abgedichtet, Harz 41 mit Verstärkungsmaterial 46 darin eingebettet und der Prozeßfolie 21 in einen Kalander 50 tritt, an den sich eine Härteeinrichtung, z.B. ein Heiz- und Temperiertisch 60 anschließt.

Wie sich bereits deutlich aus den dargestellten unterschiedlichen Zuführungen der Prozeßfolien und Materialien ergibt ist ein wesentlicher Gesichtspunkt der Erfindung darin zu sehen, daß das Verfahren kontinuierlich durchgeführt wird, wobei die einzelnen Zufuhrstationen ortsfest gegeben sind, während sich die Materialien einzeln und später als Paket kontinuierlich durch die Vorrichtung hindurch bewegen. Um die vorgenannte Bewegung bereitstellen zu können, wäre es zwar generell denkbar den Vortrieb zu nutzen, der mittels des Kalanders oder nachgeschalteter Walzen bereitgestellt werden kann, nachdem jedoch die Erfindung insbesondere darauf abzielt, eine Beschädigung der Halbzeugoberfläche zu vermeiden und andererseits eine hohe Oberflächenplanität bezüglich des Kunststoffes bereitzustellen, umfaßt die dargestellte Vorrichtung nicht dargestellt Fördermittel, die seitlich bezüglich der Bewegungsrichtung der Metallbahn vorgesehen sind. Um einen Transport zu ermöglichen ist daher zumindest für die untere Prozeßfolie 11, insbesondere jedoch für beide Prozeßfolien 11, 21 vorgesehen, daß die Folien breiter sind als das herzustellende Laminat und somit insbesondere als das Halbzeug, welches hier ein Metallband ist. Die seitlich bezüglich des Metallbandes vorstehenden Abschnitte der Prozeßfolie können nun somit z.B. durch Eingriffsbacken von oben und unten in der Flucht des Laminates eingegriffen werden, um eine in der Zeichnung von rechts nach links gerichtete Bewegung zu bewirken, ohne daß ein Eingriff mit dem herzustellenden Produkt selbst erforderlich wäre. Nachdem durch die Prozeßfolien ein praktisch geschlossener Raum gebildet wird, treten Probleme mit seitlich heraustretendem Harz praktisch nicht auf. Nachdem während des gesamten Herstellungsverfahrens die untere Prozeßfolie 11 die Oberfläche der Metallbahn 31 schützt, können auch vorbehandelte z.B. beschichtete, einbrennlackierte oder anderweitig bearbeitete Metallbahnen oder andere Halbzeuge, auch mit empfindlicher Oberfläche, zum Einsatz kommen. Durch die obere Prozeßfolie kann eine hohe Oberflächenglattheit des Erzeugnisses gewährleistet werden, da z.B. ein Anhaften bezüglich des Kalanders vollständig ausgeschlossen werden kann.

Die erzeugten Laminate zeichnen sich neben hervorragenden Oberflächeneigenschaften auch durch eine extrem hohe Bondierung zwischen Kunststoff und Halbzeug aus. Obwohl die Gründe für die erhöhte Bondierung noch nicht vollständig untersucht werden konnten, wird angenommen, daß diese einerseits aus der kontinuierlichen Natur des Herstellungsverfahrens selbst herrührt - insbesondere lassen sich bei kontinuierlichen Verfahren Staubablagerungen sowie Materialveränderungen in dem Gießharz einfach vermeiden, wobei andererseits auch die Eliminierung von Luft zwischen den zwei Prozeßfolien einen wesentlichen Einfluß zu haben scheint, da praktisch das Kunststoffmaterial direkt auf das Halbzeug, z. B. das Metallband, im wesentlichen unter Luftausschluß auflaminiert werden kann. Im wesentlichen können jedoch zusätzliche Haftvermittlersysteme die Bondierung zwischen Kunststoff und Halbzeug verbessern. Die Haftmittlersysteme werden jeweils für das eingesetzte Halbzeug und den eingesetzten Kunststoff angepasst. Aufgrund der Vielfalt der möglichen Haftvermittlersysteme seien hier nur beispielhaft genannt: Polyestersysteme, Polyurethansysteme, Siloxansyteme, Silansysteme, Mercaptansysteme und Aminsysteme. Diese können sowohl vor dem Auftrag des Harzes auf das Halbzeug aufgebracht werden, bereits in einem vorhergehenden Arbeitsschritt auf das Halbzeug aufgebracht werden oder auch zuvor der Harzmischung zugesetzt werden.

Um eine noch höhere Staubfreiheit oder auch Luftevakuierung aus dem darzustellenden Laminat gewährleisten zu können, ist es selbstverständlich möglich, entsprechende Evakuierungsmittel vorzusehen, die z.B. dazu dienen können, daß die untere Folie im wesentlichen flächig an dem Halbzeug oder Metallband anliegt oder daß entsprechend weichende Luft aus dem Harz abgesaugt werden kann und zwar vor oder nach dem Kalander.

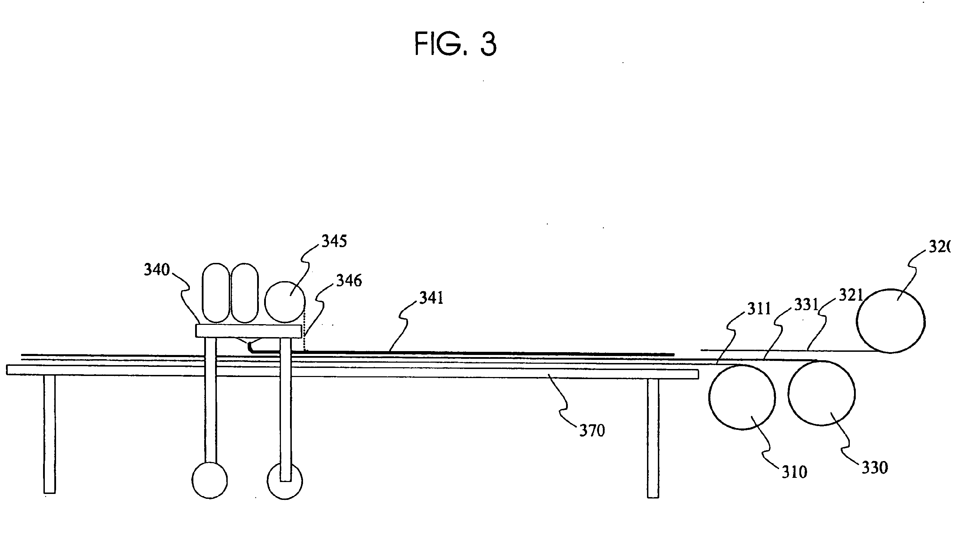

In Figur 3 ist in schematischer Seitenansicht eine Vorrichtung dargestellt, die die Herstellung eines Kunststoff-Metall-Laminats im Tischverfahren ermöglicht. Die Vorrichtung umfasst in der dargestellten Ausführungsform einen ersten Materialspeicher 310, der eine Prozessfolie 311 ausgeben kann, sofern diese verwendet wird. Ferner umfasst die dargestellte Vorrichtung eine Speicherausgabeeinrichtung 330 zum Bereitstellen einer Metallbahn 331, die wie dargestellt vor den weiteren Arbeitsschritten auf den Tisch 370 bzw. die optional dazwischen liegende Prozessfolie 310 aufgelegt wird. Dabei ist die Breite des Tisches 370 breiter als die der Metallbahn 331. In dem Bereich, wo die Metallbahn 331 und die Tischfläche 370 bzw. die optional dazwischen liegende Prozessfolie 311 zusammengeführt werden, ist eine wie in Figur 2 dargestellte optionale Abdichteinrichtung vorgesehen. Diese haftet an den seitlichen Rändern des Metallbandes 331 an den Tisch bzw. die Prozessfolie an, so dass eine flüssige oder fließfähige Substanz auf der Oberseite des Metallbandes weder an die Seitenflächen noch an die untenliegende Seite des Metallbandes gelangen kann. Ferner wird dadurch eine etwaige Randwelligkeit des Metallbandes ausgeglichen bzw. geglättet, so dass die Materialausbeute des fertigen Laminats besonders in den Seitenbereichen gesteigert wird.

Die in Figur 3 dargestellte Vorrichtung umfasst ferner eine Laminiereinrichtung 340, die beweglich bezüglich des Tisches ist. Auf ihr werden der härtbare Kunststoff 341 sowie optionales Verstärkungsmaterial 346 transportiert und ausgegeben. Darüber hinaus kann sich auf der Laminiereinrichtung eine Vorrichtung befinden, die das oben genannte Abdichten der Halbzeugbahn bezüglich des Tisches erlaubt. Durch Verfahren der Laminiereinrichtung 340 und/oder des Tisches 370 relativ zueinander wird in einem bzw. mehreren Durchgängen das Halbzeug bezüglich des Tisches abgedichtet, der härtbare Kunststoff 341 aufgebracht, sowie das optionale Verstärkungsmaterial 346 aus der Vorlage 345 in den härtbaren Kunststoff 341 eingebracht. Gegebenenfalls wird eine weitere Prozessfolie 321, vorgelegt in dem Speicher 320, nach dem Auftrag des Kunststoffs und des Verstärkungsmaterials aufgelegt.

Somit bedient sich auch diese spezielle Ausführungsform der Vorteile, die sich aus dem Abdichten des Halbzeugs bezüglich der darunter liegenden Fläche ergeben, wie insbesondere die Vermeidung, dass der ungehärtete Kunststoff die Unterseite des Halbzeugs unterlaufen kann.

Die dargelegten Ausführungsformen umfassen ferner optionale Schritte der Nachbehandlung, insbesondere eine Behandlung der Kunststoffseite für eine anschließende Verklebung z.B. durch Aufrauen oder Koronarbehandlung. Weiterhin kann eine Besäumung erfolgen und der seitliche Bereich der Abdichtung kann entfernt werden.

Selbstverständlich sind verschiedenste Veränderungen und Modifikationen an der erfindungsgemäßen Vorrichtung wie auch dem erfindungsgemäßen Verfahren möglich, ohne von dem beanspruchten Umfang abzuweichen. So ist ebenfalls beansprucht das Aufbringen von härtbarem Kunststoff auf die Prozeßfolie oder den Tisch und das anschließende Aufbringen der gegen die obere Prozeßfolie abgedichteten Halbzeugbahn. Wesentlich ist letztendlich, daß die Erfindung ein Verfahren bereitstellt, bei welchem die Halbzeugbahn bezüglich der dahinter liegenden Fläche abgedichtet wird, was effektiv und einfach die Herstellung von hochwertigem Halbzeug enthaltenden Laminaten mit gesteigerter Materialausbeute ermöglicht, wobei sich die Hochwertigkeit unter anderem in den Oberflächeneigenschaften, und zwar sowohl halbzeugseitig als auch kunststoffseitig wie auch in der Verformbarkeit und Belastbarkeit des Endproduktes widerspiegelt. Die lediglich beispielhaft angegebene Härtung unter Wärmezufuhr kann auch durch Härtung bei Raumtemperatur und/oder eine UV-Härtung ergänzt oder durch diese ersetzt werden.

## Patentansprüche

1. Verfahren zur Herstellung eines Laminats (100) umfassend die Schritte:
- Bereitstellen von zumindest einer kontinuierlichen Prozessfolie (11)
- Aufbringen einer kontinuierlichen, im wesentlichen nicht-polymeren Halbzeugbahn (31) auf die Prozessfolie (11)
- Abdichten der Halbzeugbahn (31) bezüglich der Prozessfolie (11) mittels eines Klebebandes, eines doppelseitigen Klebebandes oder mittels fluidem Klebstoffes
- Aufbringen eines härtbaren Kunststoffes (41) auf die Halbzeugbahn (31)
- Härten des Kunststoffes unter Bereitstellung einer Bondierung zwischen dem Kunststoff und dem Halbzeug

2. Verfahren nach Anspruch 1, ferner umfassend den Schritt des Aufbringens einer zweiten kontinuierlichen Prozessfolie (21) auf den härtbaren Kunststoff.

3. Verfahren nach Anspruch 1 oder 2, ferner umfassend den Schritt des Einbringens von Verstärkungsmaterial in den härtbaren Kunststoff

4. Verfahren nach einem der vorangehenden Ansprüche, ferner umfassend den Schritt des Kalandrierens mittels eines Kalanders (50), insbesondere bevorzugt unmittelbar vor dem Schritt des Aushärtens.

5. Verfahren nach einem der vorangegangenen Ansprüche, bei welchem man den Raum zwischen den Prozessfolien (11, 21) und/oder einer Prozessfolie (11, 21) und der Halbzeugbahn (31) evakuiert.

6. Verfahren nach einem der vorangegangenen Ansprüche, **dadurch gekennzeichnet, dass** zumindest eine Prozessfolie (11,21) seitlich über die Halbzeugbahn (31) ragt, um einen Eingriff durch Transportmittel zu ermöglichen.

7. Verfahren nach einem der Ansprüche 2 bis 6, **dadurch gekennzeichnet, dass** die Prozessfolien (11, 21) seitlich neben der Halbzeugbahn (31) miteinander in Eingriff bringbar sind, insbesondere im wesentlichen dichtend.

8. Verfahren nach einem der vorangegangenen Ansprüche, **dadurch gekennzeichnet, dass** die Halbzeugbahn (31) bezüglich des härtbaren Kunststoffes praktisch undurchtränkbar ist.

9. Verfahren nach einem der vorangegangenen Ansprüche, **dadurch gekennzeichnet, dass** die Halbzeugbahn (31) eine Metallbahn, insbesondere eine beschichtete Metallbahn und/oder oberflächenbehandelte Metallbahn ist.

10. Vorrichtung zum Durchführen eines Verfahrens nach einem der vorangegangenen Ansprüche, umfassend Materialspeicher (10) zum kontinuierlichen Ausgeben von zumindest einer Prozessfolie (11), eine Speicherausgabeeinrichtung (30) zum kontinuierlichen Bereitstellen einer im wesentlichen nicht-polymeren Halbzeugbahn (31), eine Abdichteinrichtung, zum Abdichten des Halbzeuges bezüglich der Prozessfolie mittels eines Klebebandes, eines doppelseitigen Klebebandes oder mittels fluidem Klebstoffes, sowie eine Einrichtung (40) zum Speichern und Ausgeben in kontinuierlicher Weise von härtbarem Kunststoff (41).

11. Vorrichtung nach Anspruch 10, umfassend einen weiteren Materialspeicher (20) zum kontinuierlichen Ausgeben von zumindest einer Prozessfolie (21).

12. Vorrichtung nach Anspruch 10 oder 11 bei welcher die Abdichteinrichtung, zum Abdichten des Halbzeuges bezüglich einer der Prozessfolien eine Klebestreifenausgabeeinrichtung mit optimalen Beaufschlagungsmitteln umfasst.

13. Vorrichtung nach Anspruch 10, 11, oder 12, umfassend eine Kunststoffverteile- (44) und/oder
- beaufschlagungseinrichtung (50), insbesondere in der Form eines Rakels (44) und/oder eines Kalanders (50).

14. Vorrichtung nach Anspruch 10, 11, 12 oder 13, ferner umfassend eine Einrichtung (45) zum Speichern und kontinuierlichen Ausgeben von Verstärkungsmaterial (46).

15. Vorrichtung nach einem der Ansprüche 10 bis 14, ferner umfassend eine Heizeinrichtung (60), insbesondere einen kontinuierlich beschickbaren Heiz- und Temperiertisch.

16. Vorrichtung nach einem der Ansprüche 10 bis 15, ferner umfassend ein Fördermittel, welches seitlich der Halbzeugbahn (31) mit zumindest einer der Prozessfolien (11, 21) in Eingriff bringbar ist.

17. Vorrichtung nach Anspruch 16, bei welcher die Fördermittel derart ausgebildet sind, dass ein dichtender Eingriff zwischen zwei Prozessfolien (11, 21) ermöglicht ist.

18. Verfahren zur Herstellung eines Laminats (300) umfassend die Schritte:
- Bereitstellen einer Auflagefläche (370) mit vorbestimmten Abmessungen
- Bereitstellen von zumindest einer optionalen ersten Prozessfolie (311)
- Aufbringen einer im wesentlichen nicht-polymeren Halbzeugbahn (331) auf die Auflagefläche oder die optionale Prozessfolie (311)
- Abdichten der Halbzeugbahn (331) bezüglich der Auflagefläche oder der optionalen ersten Prozessfolie (311) mittels eines Klebebandes, eines doppelseitigen Klebebandes oder mittels fluidem Klebstoffes
- Aufbringen eines härtbaren Kunststoffes (341) auf die Halbzeugbahn (331)
- Härten des Kunststoffes unter Bereitstellung einer Bondierung zwischen dem Kunststoff und dem Halbzeug

19. Verfahren nach Anspruch 18, ferner umfassend den Schritt des Aufbringens einer zweiten Prozessfolie (321) auf den härtbaren Kunststoff.

20. Verfahren nach Anspruch 18 oder 19, ferner umfassend den Schritt des Einbringens von Verstärkungsmaterial in den härtbaren Kunststoff.

21. Verfahren nach einem der Ansprüche 18 bis 20, bei welchem man den Raum zwischen den Prozessfolien (311, 321) und/oder einer Prozessfolie (311, 321) und der Halbzeugbahn (331) evakuiert.

22. Verfahren nach einem der Ansprüche 19 bis 21, **dadurch gekennzeichnet, dass** die Prozessfolien (311, 321) seitlich neben der Halbzeugbahn (331) miteinander in Eingriff bringbar sind, insbesondere im wesentlichen dichtend.

23. Verfahren nach einem der Ansprüche 18 bis 22, **dadurch gekennzeichnet, dass** die Halbzeugbahn (331) bezüglich des härtbaren Kunststoffes praktisch undurchtränkbar ist.

24. Verfahren nach einem der Ansprüche 18 bis 23, **dadurch gekennzeichnet, dass** die Halbzeugbahn (331) eine Metallbahn, insbesondere eine beschichtete Metallbahn und/oder oberflächenbehandelte Metallbahn ist.

25. Verfahren nach einem der Ansprüche 18 bis 24, ferner umfassend den Schritt des Schleifens der Rückseite des gehärteten Kunststoffes.

26. Vorrichtung zum Durchführen eines Verfahrens nach einem der Ansprüche 18 bis 25, umfassend eine Auflagefläche (370) mit vorbestimmten Abmessungen, einen optionalen Materialspeicher (310) zum Ausgeben von zumindest einer optionalen ersten Prozessfolie (311), eine Speicherausgabeeinrichtung (330) zum Bereitstellen einer im wesentlichen nicht-polymeren Halbzeugbahn (331), eine Abdichteinrichtung zum Abdichten des Halbzeuges bezüglich der Auflagefläche oder der optionalen Prozessfolie mittels eines Klebebandes, eines doppelseitigen Klebebandes oder mittels fluidem Klebstoffes, sowie zumindest eine relativ zur Auflagefläche (370) bewegliche Laminiereinrichtung (340) zum Speichern und Ausgeben von härtbarem Kunststoff (341).

27. Vorrichtung nach Anspruch 26, umfassend einen weiteren Materialspeicher (320) zum Ausgeben von zumindest einer Prozessfolie (321).

28. Vorrichtung nach Anspruch 26 oder 27 bei welcher die Abdichteinrichtung, zum Abdichten des Halbzeuges bezüglich einer der Prozessfolien eine Klebestreifenausgabeeinrichtung mit optimalen Beaufschlagungsmitteln umfasst.

29. Vorrichtung nach einem der Ansprüche 26 bis 28, ferner umfassend eine Laminiereinrichtung (345) zum Speichern und Ausgeben von Verstärkungsmaterial (346).

30. Kunststoff-Metall-Laminat hergestellt nach einem der Ansprüche 1 bis 9 oder 18 bis 25 und/oder mittels einer Vorrichtung nach einem der Ansprüche 10 bis 17 oder 26 bis 29, unter ballistischer Beaufschlagung mit Kugeln von 20mm Durchmesser bei einer Geschwindigkeit von 20 m/s keine Verformung zeigend.

## Claims

1. Method for manufacturing a laminate (100) comprising the steps:
- providing at least one continuous process foil (11)
- depositing a continuous, substantially non-polymeric semi-manufactured product band (31) to the process foil (11)
- sealing the semi-manufactured product band (31) with respect to the process foil (11) by means of a gluing tape, a double-sided gluing tape or by means of fluid glue
- depositing a hardenable synthetics (41) to the semi-manufactured product band (31)
- hardening the synthetics, while providing a bonding between the synthetics and the semi-manufactured product.

2. Method according to claim 1, further comprising the step of depositing a second continuous process foil (21) on the hardenable synthetics.

3. Method according to claim 1 or 2, further comprising the step of introducing reinforcement material into the hardenable synthetics.

4. Method according to one of the preceding claims, further comprising the step of calendering by means of a calender (50), especially preferably immediately prior to the hardening step.

5. Method according to one of the preceding claims, wherein the space between the process foils (11, 21) and/or one process foil (11, 21) and the semi-manufactured product band (31) is evacuated.

6. Method according to one of the preceding claims, **characterized in that** at least one process foil (11, 21) protrudes laterally beyond the semi-manufactured product band (31) in order to allow for an engagement by transport means.

7. Method according to one of claims 2 to 6, **characterized in that** the process foils (11, 21) laterally alongside/beside the semi-manufactured product band (31) may be engaged with one another, especially substantially in a sealing manner.

8. Method according to one of the preceding claims, **characterized in that** the semi-manufactured product band (31), is practically not permeable with respect to the hardenable synthetics.

9. Method according to one of the preceding claims, **characterized in that** the semi-manufactured product band (31) is a metal band, especially a coated metal band and/or a surface treated metal band.

10. Device for carrying out a method according to one of the preceding claims, comprising material storage(s) (10) for continuous dispensing of at least one process foil (11), a storage dispensing device (30) for continuous provision of a substantially non-polymeric semi-manufactured produet band (31), a sealing device for sealing the semi-manufactured product with respect to the process foil by means of a gluing tape, a double-sided gluing tape or by means of fluid glue, as well as a device (40) for storing and dispensing of hardenable synthetics (41) in a continuous manner.

11. Device according to claim 10, comprising a further material storage (20) for continuously dispensing at least one process foil (21).

12. Device according to claim 10 or 11, wherein the sealing device for sealing the semi-manufactured product with respect to one of the process foils comprises a gluing tape dispensing facility having optimal impact means.

13. Device according to claim 10, 11 or 12, comprising a synthetics distributing facility (44) and/or a synthetics impact facility (50), especially in form of a spreading knife (44) and/or a calender (50).

14. Device according to claim 10, 11, 12, or 13, further comprising a facility (45) for storing and continuously dispensing of reinforcement material (46).

15. Device according to one of the claims 10 to 14, further comprising a heating device (60), especially a continuously feedable heating and tempering table.

16. Device according to one of the claims 10 to 15, further comprising a forwarding means, which may be engaged with at least one of the process foils (11, 21) alongside/beside the semi-manufactured product band (31).

17. Device according to claim 16, wherein the forwarding means are designed in such a way that a sealing engagement between two process foils (11, 21) is enabled.

18. Method for manufacturing a laminate (300), comprising the steps:
- providing a support surface (370) having predetermined dimensions
- providing at least one optional first process foil (311)
- depositing a substantially non-polymeric semi-manufactured product band to the support surface or the optional process foil (311)
- sealing the semi-manufactured product band (331) with respect to the support surface or the optional first process foil (311) by means of a gluing tape, a double-sided gluing tape or by means of fluid glue
- depositing a hardenable synthetics (341) to the semi-manufactured product band (331)
- hardening the synthetics while depositing a bonding between the synthetics and the semi-manufactured product.

19. Method according to claim 18, further comprising the step of depositing a second process foil (321) to the hardenable synthetics.

20. Method according to claim 18 or 19, further comprising the step of introducing reinforcement material into the hardenable synthetics.

21. Method according to one of claims 18 to 20, wherein the space between the process foils (311, 321) and/or one process foil (311, 321) and the semi-manufactured product band (331) is evacuated.

22. Method according to one of claims 19 to 21, **characterized in that** the process foils (311, 321) may be engaged with each other laterally alongside/beside the semi-manufactured product band (331), especially in a substantially sealing manner.

23. Method according to one of claims 18 to 22, **characterized in that** the semi-manufactured product band (331) is practically impermeable with respect to the hardenable synthetics.

24. Method according to one of claims 18 to 23, wherein the semi-manufactured product band (331) is a metal band, especially a coated metal band and/or a surface treated metal band.

25. Method according to one of claims 18 to 24, further comprising the step of grinding the backside of the hardened synthetics.

26. Device for carrying out a method according to one of the claims 18 to 25, comprising a support surface (370) having predetermined dimensions, an optional material storage (310) for dispensing at least one optional first process foil (311), a storage dispensing device (330) for providing a substantially non-polymeric semi-manufactured product band (331), a sealing device for sealing the semi-manufactured product with respect to the support surface or the optional process foil by means of a gluing tape, a double-sided gluing tape or by means of fluid glue, as well as at least one laminating facility (340), which may be moved relative to the support surface (370), for storing and dispensing of hardenable synthetics (341.

27. Device according to claim 26, comprising a further material storage (320) for dispensing at least one process foil (321).

28. Device according to claim 26 or 27, wherein the sealing device, in order to seal the semi-manufactured product with respect to one of the process foils, comprises a gluing tape dispensing device having optimal/optional impact means.

29. Device according to one of claims 26 to 28, further comprising a laminating facility (345) for storing and dispensing reinforcement material (346).

30. Synthetics/metal laminate, which is manufactured according to one of claims 1 to 9 or 18 to 25 and/or by means of a device according to one of the claims 10 to 17 or 26 to 29, which especially does not show any deformation during ballistic impact with spheres having a diameter of 20 mm at a velocity of 20 m/s.

## Revendications

1. Procédé de fabrication d'un stratifié (100), comprenant les étapes consistant à :
fournir au moins une feuille de procédé continue (11),
déposer une bande continue de produit semi manufacturé, essentiellement non polymérique (31) sur la feuille de procédé (11)
étanchéifier la bande de produit semi-manufacturé (31) par rapport à la feuille de procédé (11) au moyen d'une bande adhésive, d'une bande adhésive double face ou d'un adhésif fluide,
déposer un matériau synthétique durcissable (41) sur la bande de produit semi manufacturé (31),
durcir le matériau synthétique, tout en mettant en place une liaison entre le matériau synthétique et le produit semi manufacturé.

2. Procédé selon la revendication 1, comprenant, en outre l'étape consistant à déposer une deuxième feuille de procédé continue (21) sur le matériau synthétique durcissable.

3. Procédé selon la revendication 1 ou 2, comprenant, en outre, l'étape consistant à introduire un matériau de renfort dans le matériau synthétique durcissable.

4. Procédé selon l'une quelconque des revendications précédentes, comprenant, en outre, l'étape consistant à laminer au moyen d'un calandre (50), en particulier de préférence immédiatement avant l'étape de durcissage.

5. Procédé selon l'une quelconque des revendications précédentes, dans lequel l'espace entre les feuilles de procédé (11, 21) et/ou une feuille de procédé (11, 21) et la bande de produit semi manufacturé (31) est évacué.

6. Procédé selon l'une quelconque des revendications précédentes, **caractérisé en ce qu'**au moins une feuille de procédé (11, 21) fait saillie latéralement au-delà de la bande de produit semi-facturé (31), afin de permettre un engagement par des moyens de transport.

7. Procédé selon l'une quelconque des revendications 2 à 6, **caractérisé en ce que** les feuilles de procédé (11, 21), à côté de/le long de la bande de produit semi-manufacturé (31), peuvent être engagées l'une avec l'autre, en particulier de manière sensiblement étanche.

8. Procédé selon l'une quelconque des revendications précédentes, **caractérisé en ce que** la bande de produit semi-manufacturé (31) est pratiquement imperméable par rapport au matériau synthétique durcissable.

9. Procédé selon l'une quelconque des revendications précédentes, **caractérisé en ce que** la bande de produit semi-manufacturé (31) est une bande de métal, en particulier une bande de métal revêtue et/ou une bande de métal ayant une surface traitée.

10. Dispositif pour réaliser un procédé selon l'une quelconque des revendications précédentes, comprenant des dispositifs de stockage de matériau (10) pour délivrer de manière continue au moins une feuille de procédé (11), un dispositif distributeur de stockage (30) pour une mise à disposition continue d'une bande de produit semi-manufacturé sensiblement non polymérique (31), un dispositif d'étanchéité pour étanchéifier le produit semi-manufacturé par rapport à la feuille de procédé, au moyen d'une bande de collage, d'une bande de collage double face ou au moyen d'un matériau de collage fluide, ainsi qu'un dispositif (40) pour stocker et délivrer des matériaux synthétiques durcissables (41) de manière continue.

11. Dispositif selon la revendication 10, comprenant, en outre, un dispositif de stockage de matériau (20) pour délivrer de manière continue au moins une feuille de procédé (21).

12. Dispositif selon la revendication 10 ou 11, dans lequel le dispositif d'étanchéité pour étanchéifier le produit semi-manufacturé par rapport à l'une des feuilles de procédé comprend un dispositif distributeur de rouleau collant ayant des moyens d'impact optimaux.

13. Dispositif selon la revendication 10, 11 ou 12, comprenant un dispositif distributeur de matériau synthétique (44) et/ou un dispositif d'impact de matériau synthétique (50), en particulier sous la forme d'un couteau pour étaler (44) et/ou d'un calandre (50).

14. Dispositif selon la revendication 10, 11, 12, ou 13, comprenant, en outre, un dispositif (45) pour stocker et délivrer de manière continue du matériau de renfort (46).

15. Dispositif selon l'une quelconque des revendications 10 à 14, comprenant, en outre, un dispositif de chauffage (60), en particulier une table de chauffage et de revenu qui peut-être garnie en continu.

16. Dispositif selon l'une des revendications 10 à 15, comprenant, en outre, des moyens d'acheminement, qui peuvent être engagés avec au moins une des feuilles de procédé (11, 21) le long de/à côté de la bande de produit semi-manufacturé (31).

17. Dispositif selon la revendication 16, dans lequel les moyens d'acheminement sont conçus de manière à ce qu'un engagement d'étanchéité soit établi entre les deux feuilles de procédé (11, 21).

18. Procédé de fabrication d'un stratifié (300), comprenant les étapes consistant à :
fournir une surface de support (370) ayant des dimensions prédéterminées,
fournir au moins une première feuille de procédé optionnelle (311),
déposer une bande de produit semi-manufacturé sensiblement non polymérique (331) sur la surface de support ou sur la feuille de procédé optionnelle (311),
étanchéifier la bande de produit semi-manufacturé (331) par rapport à la surface de support ou à la première feuille de procédé optionnelle (311), au moyen d'une bande de colle, une bande de colle double face, ou au moyen d'une matériau de collage fluide,
déposer un matériau synthétique durcissable (341) sur la bande de produit semi-manufacturé (331),
durcir le matériau synthétique en mettant en place un moyen de liaison entre le matériau synthétique et le produit semi-manufacturé.

19. Procédé selon la revendication 18, comprenant, en outre, l'étape consistant à déposer une deuxième feuille de procédé (321) sur le matériau synthétique durcissable.

20. Procédé selon l'une des revendications 18 ou 19, comprenant, en outre, l'étape consistant à introduire un matériau de renfort dans le matériau synthétique durcissable.

21. Procédé selon l'une quelconque des revendications 18 à 20, dans lequel l'espace entre les feuilles de procédés (311, 321) et/ou une feuille de procédé (311, 321) et la bande de produit semi-manufacturé (331) est évacué.

22. Procédé selon l'une quelconque des revendications 19 à 21, **caractérisé en ce que** les feuilles de procédé (311, 321) peuvent être engagées l'une avec l'autre le long de/à côté de la bande de produit semi-manufacturé (331), en particulier de manière sensiblement étanche.

23. Procédé selon l'une quelconque des revendications 18 à 22, **caractérisé en ce que** la bande de produit semi-manufacturé (331) est pratiquement imperméable par rapport au matériau synthétique durcissable.

24. Procédé selon l'une quelconque des revendications 18 à 23, **caractérisé en ce que** la bande de produit semi-manufacturé (331) est une bande de métal, en particulier une bande de métal revêtue et/ou une bande de métal ayant une surface traitée.

25. Procédé selon l'une quelconque des revendications 18 à 24, comprenant, en outre, l'étape consistant à poncer le côté arrière du matériel synthétique.

26. Dispositif pour réaliser un procédé selon l'une des revendications 18 à 25, comprenant une surface de support (370) de dimensions prédéterminées, un dispositif de stockage de matériau optionnel (70) pour délivrer au moins une première feuille de procédé optionnelle (311), un dispositif distributeur de stockage (330) pour fournir une bande de produit semi-manufacturé sensiblement non polymérique (331), un dispositif d'étanchéité pour étanchéifier le produit semi-manufacturé par rapport à la surface de support ou à la feuille de procédé optionnelle, au moyen d'une bande de collage, une bande de collage double face ou au moyen d'un matériau de collage fluide, ainsi qu'au moins un dispositif de laminage (340), qui peut être mobile par rapport à la surface de support (370), pour stocker et délivrer un matériau synthétique durcissable (341).

27. Dispositif selon la revendication 26, comprenant, en outre, un stockage de matériau supplémentaire (320) pour délivrer au moins une feuille de procédé (321).

28. Dispositif selon la revendication 26 ou 27, dans lequel le dispositif d'étanchéité, afin d'étanchéifier le produit semi-manufacturé par rapport à l'une des feuilles de procédé, comprend un dispositif distributeur de bande collante ayant des moyens d'impact optimal.

29. Dispositif selon l'une quelconque des revendications 26 à 28, comprenant, en outre, un dispositif de laminage (345) pour stocker et délivrer un matériau de renfort (346).

30. Stratifié synthétique - métal, qui est fabriqué selon l'une quelconque des revendications 1 à 9 ou 18 à 25, et/ou au moyen d'un dispositif selon l'une quelconque des revendications 10 à 17 ou 26 à 29, qui ne montre pas de déformation au cours d'un impact balistique avec des boules ayant un diamètre de 20mm à une vitesse de 20m/s.
